# EUROPÄISCHE PATENTSCHRIFT

(11) **EP 1 915 270 B1**
(45) Veröffentlichungstag und Bekanntmachung des Hinweises auf die Patenterteilung: **18.03.2009**
(21) Anmeldenummer: 06776581.8
(22) Anmeldetag: 03.08.2006
(51) Int. Cl.: B60J 10/00

(54) **VERFAHREN ZUM VERBINDEN DES STOSS VON DICHTUNGSPROFILEN SOWIE VORRICHTUNG ZU DESSEN DURCHFÜHRUNG**
METHOD FOR CONNECTING THE ENDS OF PROFILED SEALING ELEMENTS, AND DEVICE FOR CARRYING OUT SAID METHOD
PROCEDE POUR ASSEMBLER LE BORD DE PROFILS D'ETANCHEITE ET DISPOSITIF POUR LE METTRE EN OEUVRE

(30) Priorität: 17.08.2005 DE 102005039214
(43) Veröffentlichungstag der Anmeldung: 30.04.2008
(73) Patentinhaber: Grohmann Engineering GmbH, 54595 Prüm (DE)
(72) Erfinder: GROHMANN, Klaus, 54597 Hersdorf (DE); THOMMES, Lothar, 54597 Matzerath (DE); KOHLEN, Bernhard, 54636 Ingendorf (DE)
(74) Vertreter: Kohlmann, Kai
(86) Internationale Anmeldenummer: PCT/EP2006/007675
(87) Internationale Veröffentlichungsnummer: WO 2007/019961

(56) Entgegenhaltungen:
- EP-A2- 0 665 261
- WO-A-01/89811
- WO-A2-97/06205
- DE-A1- 3 012 387
- DE-A1- 3 906 278
- DE-A1- 10 138 781

## Beschreibung

Die Erfindung betrifft ein Verfahren zum Verbinden des Stoß von zwei übereinstimmend profilierten Enden mindestens eines Dichtungsprofils, das zuvor an der Oberfläche eines Fahrzeugs oder Fahrzeugteils angebracht wurde. Des weiteren betrifft die Erfindung eine Vorrichtung zur Durchführung des Verfahrens.

Dichtungsprofile an Fahrzeugen oder Fahrzeugteilen dienen dazu, ein bewegliches Fahrzeugteil, beispielsweise eine Fahrzeugtür, im geschlossenen Zustand gegenüber dem Karosserierahmen abzudichten. Üblicherweise werden derartige Dichtungsprofile mittels mehrerer Segmente aufweisender Hilfsvorrichtungen an der Fahrzeugtür angebracht.

Um kürzere Fertigungszeiten und niedrigerer Investitionskosten zu ermöglichen, schlägt die DE 101 38 781 A1 ein Verfahren zur Anbringung einer Dichtung an einer Fahrzeugtür vor, bei dem die auf einer Rolle als Endlos-Profil vorliegende Dichtung von der Rolle abgezogen und mit einer an der Dichtung vorhandenen Klebefläche entlang einer für die Anbringung vorgesehene Linie an der Tür umlaufend aufgerollt wird. Unter dem Begriff "aufgerollt" wird dabei verstanden, dass die Dichtung mit Hilfe von Andruckrollen sukzessive an der Fläche der Fahrzeugtür der vorgegebenen Montagelinie folgend angedrückt und so angebracht wird. Der Vorteil dieses Roll-Verfahrens besteht darin, dass es die vollständige Anbringung einer umlaufenden Dichtung in einem fortlaufenden Arbeitsgang ermöglicht. Die Anbringung erfolgt dabei mittels eines Roboters, der Führungsmittel für die Dichtung aufweist. Nach Beendigung des Vorganges der Anbringung wird die Dichtung mittels einer Schneidvorrichtung des Roboters auf Stoß abgeschnitten.

Die an dem Stoß aneinander anliegenden Enden des Dichtungsprofils können sich gegeneinander verschieben. Hierdurch wird nicht nur der optische Gesamteindruck der Dichtung gestört, sondern auch eine Beschädigung der Dichtung an dem Stoß begünstigt. Hinzu kommt, dass bestimmte Fahrzeugtypen, wie insbesondere Geländefahrzeuge, aus Gründen der Wasserdichtigkeit eine umlaufende, geschlossene Türdichtung benötigen.

Es besteht daher der Wunsch, den Stoß des Dichtungsprofils zu verbinden, ohne dass die Montage- und Kostenvorteile nach dem vorstehend beschriebenen Rollverfahren zur Anbringung einer Dichtung wieder aufgezehrt werden.

Ferner ist aus der WO 01/89811 A1 ein Verfahren und eine Vorrichtung zum Verbinden von Profilenden zu einem geschlossenen Profil bekannt, bevor dieses beispielsweise an einer Fahrzeugkarosserie angebracht wird. Zum Verbinden werden die Profilenden in Halteelementen eingeklemmt. Die Halteelemente sind auf einer graden Linie gegeneinander verschieblich angeordnet. Eine Rolle mit thermoplastischer Folie ist oberhalb der beiden verschieblichen Halteelemente mittels einer Halterung angeordnet. Die Folie kann von der Rolle zwischen den beiden Profilenden abgezogen werden Auf beiden Seiten der Folie sind Heizelemente angeordnet, die an einem Transportschlitten befestigt sind. Die Heizelemente erwärmen die Profilenden sowie die Folie. Nach dem Erwärmen wird der Transportschlitten mit den Heizelementen aus dem Spalt zwischen den Halteelementen zurückgezogen. Anschließend bewegen sich die Halteelemente geradlinig aufeinander zu und bringen die Profilenden mit den gegenüberliegenden Seiten der Folie mit einem definierten Druck zusammen. Die erhitzte Folie verbindet die beiden Profilenden thermisch miteinander.

Der Erfindung liegt daher die Aufgabe zu Grunde, ein für eine Prozessautomatisierung geeignetes Verfahren zum Verbinden des Stoß von zwei übereinstimmend profilierten Enden mindestens eines Dichtungsprofils, das zuvor bereits an der Oberfläche eines Fahrzeugs oder Fahrzeugteils angebracht wurde, zu schaffen. Des Weite soll eine vorteilhafte Vorrichtung zur Durchführung des Verfahrens angegeben werden.

Diese Aufgabe wird durch ein Verfahren mit den Merkmalen des Anspruchs 1. gelöst.

Das Verfahren eignet sich zum Verbinden des Stoß von zwei übereinstimmend profilierten Enden eines einzigen Dichtungsprofils, beispielsweise zur Herstellung einer Tür-oder Schiebedachabdichtung. Das Verfahren kann jedoch auch zum Verbinden des Stoß von zwei übereinstimmend profilierten Enden zweier Dichtungsprofile verwendet werden, die zuvor an dem Fahrzeug oder Fahrzeugteil angebracht wurden. Erforderlich ist lediglich, dass die am Stoß aufeinandertreffenden Enden übereinstimmend profiliert sind.

Die zunächst an der Oberfläche eines Fahrzeugs oder Fahrzeugteils angebrachten Enden des Dichtungsprofils liegen an dem Stoß bündig aneinander. Um an dieser Übergangsstelle die Enden dauerhaft miteinander zu verbinden, ist es zunächst erforderlich, zeitweilig einen Arbeitsspalt zwischen den Enden zu erzeugen. Dies wird dadurch erreicht, dass die Enden des mindestens einen Dichtungsprofils voneinander weg bewegt werden. Dies erfolgt insbesondere, indem diese im Abstand zu dem Stoß jeweils mittels eines Greifers erfasst und auseinander gezogen werden. Der Verschiebeweg jedes Greifers beträgt wenige Millimeter. Infolge dessen bildet sich zwischen den Enden des Dichtungsprofils ein Spalt, der in Richtung der Befestigungsfläche der Dichtung auf der Oberfläche des Fahrzeugs oder Fahrzeugteils insbesondere keilförmig ausläuft. Alternativ kann der Arbeitsspalt erzeugt werden, indem die Enden des Dichtungsprofils im Abstand zu dem Stoß mittels eines Niederhalters zusammen gedrückt werden. Auf Grund der Verformung des Dichtungsprofils bildet sich an dem Stoß der Arbeitsspalt aus.

In diesen Arbeitsspalt wird eine Schweißfolie eingebracht, die durch Zufuhr von Wärmeenergie mit den Enden des mindestens einen Dichtungsprofils verschweißt wird, nachdem der Arbeitsspalt am Stoß wieder aufgehoben wurde. Das Aufheben des Arbeitsspaltes erfolgt entweder durch Freigabe der Profilenden durch die Greifer oder durch aktive Aufeinanderzubewegung der Greifer. Zusätzlich kann Druck auf die Enden des Dichtungsprofils ausgeübt werden, der die Verschweißung an dem Stoß unterstützt. Die in den Arbeitsspalt eingebrachte Schweißfolie besteht beispielsweise aus thermoplastischen Elastomeren, die sich unter Hitzeeinwirkung mit dem Dichtungsmaterial verbinden. Je nach Materialpaarung (Schweißfolie / Dichtungspröfil), sind hierzu Temperaturen von etwa 100°C - 300°C erforderlich.

Die erforderliche Wärmeenergie kann durch Wärmeleitung, Wärmestrahlung oder Wärmekonvektion den Profilenden oder der Schweißfolie oder sowohl den Profilenden als auch der Schweißfolie zugeführt werden. Die Zufuhr der Wärmeenergie durch Wärmeleitung erfolgt insbesondere dadurch, dass die zu erwärmenden Profilenden in dem Arbeitsspalt zeitweilig mit einem wärmeren Körper, insbesondere einer Heizplatte in Berührung gebracht werden. Um die für die Verschweißung erforderliche Temperatur zu gewährleisten, ist es erforderlich, beim Einbringen der Wärmeenergie den anschließenden Wärmeverlust zu berücksichtigen, der durch die zeitliche Abfolge der einzelnen Verfahrensschritte, die verwendeten Materialien und Umgebungsbedingungen bestimmt wird.

Um bei einer aktiven Unterstützung der Verschweißung mittels der Greifer ein Auswandern der Profilenden an dem Stoß zu verhindern, ist in einer vorteilhaften Ausgestaltung der Erfindung zusätzlich ein dem Profil angepasster Formgreifer vorgesehen. Der Formgreifer hat lediglich die Funktion, das Dichtungsprofil in unmittelbarer Nähe zum Stoß zu stabilisieren und zu führen. Er übt jedoch keine in Achsrichtung des Dichtungsprofils wirkende Kraft aus.

Eine vorteilhafte Vorrichtung zur Durchführung des Verfahrens umfasst Mittel zum Erzeugen des Arbeitsspaltes an den Enden des Dichtungsprofils, eine Schweißfolienzuführung und ein Heizsystem zum Verschweißen der Schweißfolie mit den Enden des Dichtungsprofils sowie eine mindestens in zwei Ebenen wirksame Positioniereinheit zum Bewegen der Schweißfolienzuführung und des Heizsystems zwischen einer Ruhestellung und einer Arbeitsstellung.

Um die erfindungsgemäße Vorrichtung in eine Produktionslinie für ein Automobil einzubinden, wird sie vorzugsweise an einem Roboterarm angeordnet, der die Vorrichtung in eine definierte Lage zu dem Stoß der miteinander zu verbindenden Profilenden bewegt. In kinematischer Umkehr ist es ebenfalls möglich, die Vorrichtung zur Durchführung des Verfahrens stationär, beispielsweise an einem Tragrahmen anzuordnen und ein Karosserieteil mit der bereits applizierten Dichtung zu der Vorrichtung auszurichten.

Die Mittel zum Erzeugen des Arbeitsspaltes umfassen vorzugsweise zwei Greifer mit jeweils zwei gegeneinander beweglichen Greifarmen und mindestens einen Antrieb zum Verändern des Abstandes zwischen den beiden Greifern in Achsrichtung des Profilverlaufs im Bereich des Stoß. Die beiden Greifarme jedes Greifers sind vorzugsweise schwenkbeweglich zueinander angeordnet und im Bereich der Greifbacken plattenförmig ausgeführt, um Beschädigungen des empfindlichen Dichtungsprofils zu vermeiden. Für die Schwenkbewegung besitzt jeder Greifer einen Verschwenkantrieb.

Alternativ können die Mittel zum Erzeugen des Arbeitsspalts zwei Niederhalter aufweisen, die mittels eines Antriebs zwischen einer Ausgangsposition und einer Arbeitsposition bewegbar sind. In der Arbeitsposition drücken die Niederhalter auf beiden Seiten des Stoß das Dichtungsprofil zusammen. In der Ruheposition befinden sich die Niederhalter oberhalb des Dichtungsprofils. Die Niederhalter können beispielsweise mit einem angetriebenen Linearschlitten oder Schwenkarm in die und aus der Arbeitsposition bewegt werden.

Das Heizsystem der Vorrichtung weist vorzugsweise eine Heizplatte auf, die insbesondere über eine elektrische Widerstandsheizung erwärmt wird. Die Platte selbst kann beispielsweise aus Keramik bestehen. Die Dicke der Platte ist auf den Arbeitsspalt abgestimmt, so dass die Oberflächen der Platte mit den Profilenden in Berührung kommen.

Die Schweißfolienzuführung weist zwei gegeneinander bewegliche Klemmbacken zum Aufspannen der Schweißfolie auf, wobei beide Klemmbacken miteinander fluchtende Einschnitte aufweisen, deren Größe mindestens dem Querschnitt des von den Klemmbacken umgebenen Dichtungsprofils entspricht. Indem die Klemmbacken gegeneinander bewegt werden, wird die zwischen den Klemmbacken befindliche Schweißfolie aufgespannt. Die Schweißfolie kann vereinzelt oder kontinuierlich den Klemmbacken für jeden Verschweißvorgang zugeführt werden. Sofern die Schweißfolie vereinzelt zugeführt wird, werden zunächst Folienstücke, beispielsweise durch Stanzen vorkonfektioniert und mittels einer Handhabungseinheit zwischen die Klemmbacken eingesetzt. In einer bevorzugten Ausführungsform der Erfindung weist die Schweißfolienzuführung jedoch eine Vorratsspule und eine Aufwickelspule für eine bahnförmige Schweißfolie sowie zwischen den Spulen angeordnete Führungsmittel auf, mittels derer die von der Vorratsspule abgezogene bahnförmige Schweißfolie zwischen den Klemmbacken im Bereich der miteinander fluchtenden Einschnitte hindurchgeführt wird. Während des Verschweißens ist die Schweißfolie zwischen den Klemmbacken eingeklemmt. Anschließend werden die Klemmbacken gelöst und ein unverbrauchtes Stück Schweißfolie von der Vorratsspule abgezogen und dem weiteren Prozess zugeführt. Durch das Verschweißen der Folienbahn mit den Dichtungsprofilenden im Bereich des Stoß wird ein dem Profilquerschnitt entsprechendes Folienstück aus der Folienbahn herausgelöst. Aus diesem Grund muss die Breite der Folienbahn größer als die maximale Höhe des Stoßquerschnittes sein, da die Folienbahn anderenfalls durch das Verschweißen zerteilt und daher nicht von der Aufwickelspule aufgewickelt und angetrieben werden könnte.

Nachfolgend wird die Erfindung anhand der Figuren näher erläutert. Es zeigen
- Figur 1: eine schematische, perspektivische Ansicht einer Vorrichtung zur Durchführung des erfindungsgemäßen Verfahrens.
- Figur 2 a-d: eine schematische Darstellung der erfindungsgemäßen Verfahrensschritte.

Die insgesamt mit 1 bezeichnete Vorrichtung zur Durchführung des Verfahrens besteht im Wesentlichen aus zwei Profilgreifern 2a, b, einer Schweißfolienzuführung 3 sowie einem Heizsystem 4. Sowohl die Schweißfolienzuführung 3 als auch das Heizsystem 4 sind jeweils über einen Vertikalschlitten 5, 6 an einem gemeinsamen Horizontalschlitten 7 befestigt. In dem gezeigten Ausführungsbeispiel stützt sich die Vorrichtung 1 über den Horizontalschlitten 7 an einem ortsfesten, der Übersichtlichkeit halber nicht dargestellten Gestell ab.

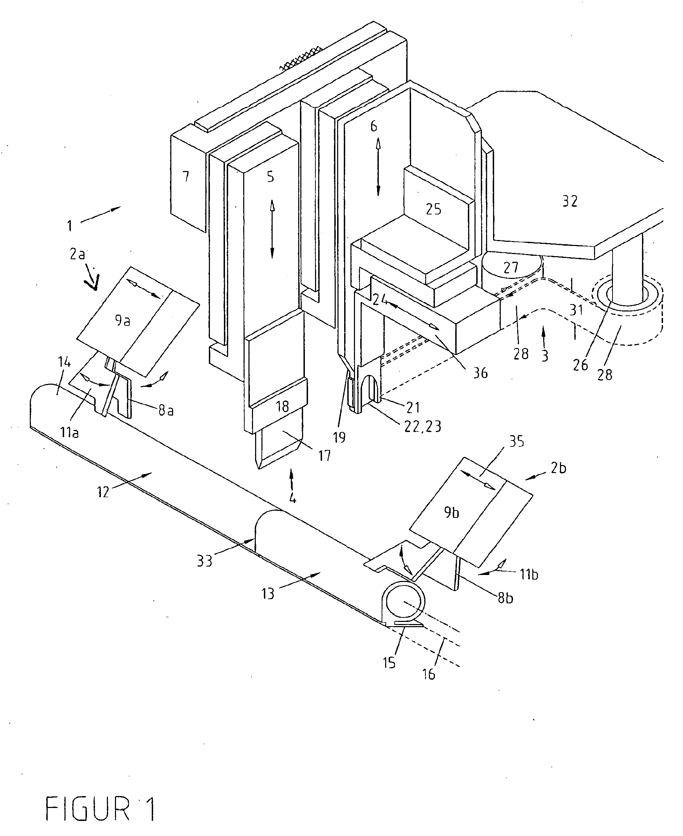

Die Profilgreifer 2a, b weisen jeweils zwei gegeneinander verschwenkbare Greifarme 8a, b auf, die mittels eines in dem Gehäuse 9a, 9b angeordneten Schwenkantriebs in Richtung der Pfeile 11a, b verschwenkt werden können. Darüber hinaus sind die Profilgreifer 2a, b in Richtung des Pfeile 35 mit mindestens einem in der Figur 1 nicht dargestellten Antrieb in ihrem Abstand zueinander veränderlich.

In Figur 1 liegen die Greifarme 8a, b an den Enden 12, 13 eines Dichtungsprofils 14 an, das zuvor an der Oberfläche einer Fahrzeugtür angebracht wurde. Hierzu befindet sich auf der Unterseite des Profilfußes 15 der Hohlkammerdichtung eine Klebefläche, die entlang der für die Anbringung vorgesehenen Linien 16a, 16 b aufgeklebt ist.

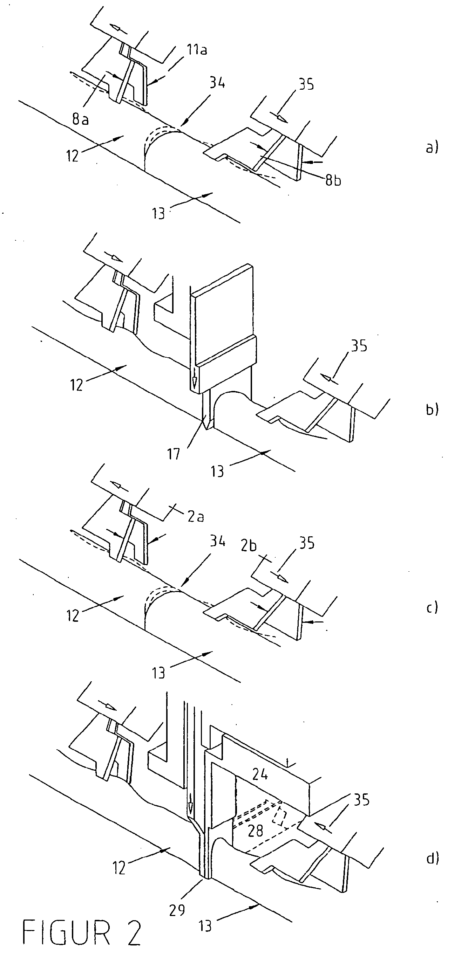

Das Heizsystem 4 weist eine stirnseitig, schneidenförmig zulaufende Heizplatte 17 aus einem keramischen Werkstoff auf. Die Heizplatte 17 befindet sich in einer Halterung 18 mit einer elektrischen Widerstandsheizung zur Temperierung der Heizplatte 17. Die Halterung 18 ist an dem Vertikalschlitten 5 angeordnet, der sich in Figur 1 in seiner oberen Endlage oberhalb des Stoßes zwischen den Enden 12, 13 des Dichtungsprofils 14 befindet. Aus dieser Position kann die Heizplatte 17 mittels des Vertikalschlittens 5 in ihrer Arbeitsstellung verfahren werden, was weiter unten anhand der Figur 2 erläutert wird.

Die insgesamt mit 3 bezeichnete Schweißfolienzuführung besitzt eine erste ortsfeste Klemmbacke 19 sowie eine in Richtung dieser ortsfesten Klemmbacke 19 bewegliche Klemmbacke 21. Beide Klemmbacken 19, 21 weisen an ihrer Unterseite miteinander fluchtende Einschnitte 22, 23 auf, die geringfügig größer als der Querschnitt des Dichtungsprofils 14 sind. Die Klemmbacken 19, 21 können daher das Dichtungsprofil in den Einschnitten 22, 23 aufnehmen. Die bewegliche Klemmbacke 21 ist an einem Horizontalschlitten 24 angeordnet, mit denen die Klemmbacken gegeneinander gedrückt und voneinander weg bewegt werden können. Dieser Horizontalschlitten 24 zur Aufnahme der beweglichen Klemmbacke 21 ist wiederum über einen Träger 25 an dem Vertikalschlitten 6 angeordnet. Der Vertikalschlitten 6 befindet sich in einer oberen Endlage oberhalb des Dichtungsprofils und der Horizontalschlitten 7 in einer hinteren Endlage, die die Ruhestellung der Schweißfolienzuführung 3 definiert. An dem Vertikalschlitten 6 ist außerdem ein Spulenstand 32 für eine Vorratsspule 26 und einer Aufwickelspule 27 für eine bahnförmige Schweißfolie 28 angeordnet. Die von der Vorratsspule 26 abgezogene Schweißfolie 28 wird mittels nicht dargestellten Führungsmitteln zwischen den Klemmbacken 19, 21 in Höhe der Einschnitte 22, 23 hindurchgeführt und an der im Bild vorderen Kante 29 der ortsfesten Klemmbacke 19 umgelenkt. Die Höhe 31 der Folienbahn ist geringfügig größer als die maximale Höhe der Einschnitte 22, 23, um den sicheren Rücktransport der nach dem Verschweißen der Folienbahn verbleibenden Restfolie auf die Aufwickelspule 27 zu gewährleisten.

Nachfolgend wird das erfindungsgemäße Verfahren näher erläutert:
Zunächst wird die Fahrzeugtüre mit dem bereits aufgeklebten Dichtungsprofil 14 in die in Figur 1 dargestellte Bearbeitungsposition gebracht. Sodann muss für die Verbindung des Stoß 33 der beiden übereinstimmend profilierten Enden 12, 13 des Dichtungsprofils 14 ein Arbeitsspalt 34 erzeugt werden. Zu diesem Zweck werden die Enden 12, 13 wie in Figur 2a dargestellt, voneinander weg bewegt, in dem diese im Abstand zu dem Stoß 33 mittels der Greiferarme 8a, 8b erfasst und anschließend in Richtung der Pfeile 35 auseinander gezogen und in dieser Position gehalten werden. Hierdurch wird der in Richtung des Profilfußes 15 keilförmige Arbeitsspalt 34 gebildet.

Anschließend wird die Heizplatte 17 des Heizsystems 4 mit der keilförmigen Spitze voran in den Arbeitsspalt 34 abgesenkt. Hierzu wird der Vertikalschlitten 5 aus der in Figur 1 dargestellten Endlage oberhalb des Stoß 33 nach unten verfahren. Die Profilenden kommen dabei an den Oberflächen der Heizplatte 17 zur Anlage. Die Wärmeleitung kann unterstützt werden, indem nach dem Absenken des Heizsystems 4 die Profilenden 12, 13 mit Hilfe der Profilgreifer 2a, b aufeinander zu bewegt werden, wie dies in Figur 2b durch die Pfeile 35 angedeutet ist. Nach Ablauf einer für den erforderlichen Wärmeeintrag vorbestimmten Zeit, wird das Heizsystem 4 mit Hilfe des Vertikalschlittens 5 aus dem Arbeitsspalt 34 entfernt. Sofern die Enden 12, 13 des Dichtungsprofils 14 zuvor, wie in Figur 2b dargestellt, gestaucht wurden, müssen die Foliengreifer 2a, b zunächst wieder, wie in Figur 2c dargestellt, voneinander weg bewegt werden, um den Arbeitsspalt 34 zu erhalten.

Zum Einbringen der Schweißfolie 28 in den Arbeitsspalt wird bei geöffneten Klemmbacken 19, 21 ein Stück unverbrauchte Schweißfolie von der Vorratsspule 26 abgezogen und in den Bereich des Einschnitts 23 der beweglichen Klemmbacke 21 gebracht. Anschließend wird die bewegliche Klemmbacke 21 mittels des Horizontalschlittens 24 in Richtung des Pfeils 36 gegen die ortsfeste Klemmbacke 19 gedrückt. Hierdurch wird die Schweißfolie 28 zwischen den beiden Klemmbacken aufgespannt. Die derart aufgespannte Schweißfolie 28 wird durch Verfahren der Schweißfolienzuführung 3 mit Hilfe der Vertikal- und Horizontalschlitten 6, 7 in den Arbeitsspalt eingebracht. Dabei umgeben die Klemmbacken 19, 21 das Dichtungsprofil 14, wie dies in Figur 2d dargestellt ist. Sodann wird der Arbeitsspalt 34 am Stoß 33 aufgehoben, so dass die Enden 12, 13 des Dichtungsprofils 14 an den Schweißfolie 28 zur Anlage gelangen. Der Kontakt zwischen der Schweißfolie 28 und den Enden 12,13 wird noch dadurch unterstützt, dass die Greifer 2a, 2b die Enden in Richtung der in Figur 2d dargestellten Pfeile 35 drücken.

Die kurz zuvor in die Enden des Dichtungsprofils 14 (Figur 2b) eingebrachte Wärmeenergie bewirkt, dass sich die aufgespannte Folie 28 mit den Enden 12,13 verschweißt und diese an dem Stoß 33 verbindet. Nach der Verschweißung wird die Schweißfolienzuführung 3 von dem Dichtungsprofil 14 nach oben weg bewegt, um die Vorrichtung 1 zum Verbinden des Stoßes eines nächsten Dichtungsprofils vorzubereiten. Dabei wird die bahnförmige Schweißfolie 28 entlang der Kontur des Dichtungsprofils 14 abgetrennt, so dass die Folienbahn einen dem Querschnitt des Dichtungsprofils 14 entsprechenden Einschnitt an dieser Stelle aufweist. Nach dem Lösen der Klemmbacken wird die Restfolienbahn mit diesem Einschnitt mittels der Aufwickelspule 27 um die Kante 29 der ortfesten Klemmbacke 19 gezogen, bis der Einschnitt mit dem Einschnitt 22 der ortsfesten Backe fluchtet. Hierdurch wird gewährleistet, dass stets nur eine Lage der bahnförmigen Folienbahn mit den Enden des Dichtungsprofils verschweißt wird. Eine alternative Lösung besteht darin, das die Restfolienbahn über separate Umlenkrollen auf eine Aufwickelspule aufgewickelt wird, die auf einer in Bezug auf die Klemmbacken 19, 21 gegenüberliegenden Seite zur Vorratsspule liegt.

Das in Figuren 2b und d dargestellte Gegeneinanderdrücken der Enden 12, 13 des Dichtungsprofils 14 dient lediglich der Unterstützung des erfindungsgemäßen Verfahrens, ist jedoch nicht zwingend erforderlich. Insbesondere genügt es für die Verschweißung der Enden des Dichtungsprofils mit der Schweißfolie (vgl. 1d), wenn lediglich die Greifarme 8a, b auseinandergeschwenkt und damit die Enden 12, 13 freigegeben werden. Die Eigenspannung des elastischen Dichtungsprofils ist ausreichend, um die Anlage der Enden des Dichtungsprofils an der Schweißfolie sicher zu stellen.

### Bezugszeichenliste

| Nr. | Bezeichnung | Nr. | Bezeichnung |
|---|---|---|---|
| 1. | Vorrichtung | 29. | Kante |
| 2. a, b | Profilgreifer | 30. | --------------------------------- |
| 3. | Schweißfolienzuführung | 31. | Breite Folienbahn |
| 4. | Heizsystem | 32. | Spulenstand |
| 5. | Vertikalschlitten | 33. | Stoß |
| 6. | Vertikalschlitten | 34. | Arbeitsspalt |
| 7. | Horizontalschlitten | 35. | Pfeil (Bewegung Profilgreifer) |
| 8. a, b | Greifarme | 36. | Pfeile (Bewegung Klemmbacke) |
| 9. a, b | Gehäuse | | |
| 10. | ---------------- | | |
| 11. a, b | Pfeile (Schwenkbewegung) | | |
| 12. | Ende | | |
| 13. | Ende | | |
| 14. | Dichtungsprofil | | |
| 15. | Profilfuß | | |
| 16. | Linie | | |
| 17. | Heizplatte | | |
| 18. | Halterung | | |
| 19. | Klemmbacke (ortsfest) | | |
| 20. | --------------------------- | | |
| 21. | Klemmbacke (beweglich) | | |
| 22. | Einschnitt | | |
| 23. | Einschnitt | | |
| 24. | Horizontalschlitten | | |
| 25. | Träger | | |
| 26. | Vorratsspule | | |
| 27. | Aufwickelspule | | |
| 28. | Schweißfolie | | |

## Patentansprüche

1. Verfahren zum Verbinden des Stoß (33) von zwei übereinstimmend profilierten Enden (12,13) mindestens eines Dichtungsprofils (14), das zuvor an der Oberfläche eines Fahrzeugs oder Fahrzeugteils angebracht wurde und dessen Enden (12, 13) an dem Stoß bündig aneinander liegen, wobei die Enden des mindestens einen Dichtungsprofils voneinander weg bewegt werden, um einen Arbeitsspalt (34) zu erzeugen, der in Richtung der Befestigungsfläche des Dichtungsprofils an der Oberfläche des Fahrzeugs oder Fahrzeugteils ausläuft, und in den Arbeitsspalt (34) eine Schweißfolie (28) eingebracht wird, die durch Zufuhr von Wärmeenergie mit den Enden (12,13) des mindestens einen Dichtungsprofils (14) verschweißt wird, nachdem der Arbeitsspalt (34) am Stoß aufgehoben wurde.

2. Verfahren nach Anspruch 1, **dadurch gekennzeichnet, dass** die Wärmeenergie durch Wärmeleitung zugeführt wird, indem die zu erwärmenden Enden (12,13) in dem Arbeitsspalt (34) zeitweilig mit einem wärmeren Körper (17) in Berührung gebracht werden.

3. Verfahren nach Anspruch 1 oder 2, **dadurch gekennzeichnet, dass** die Wärmeenergie durch Wärmestrahlung zugeführt wird, indem elektromagnetische Wellen auf den Arbeitsspalt (34) gerichtet werden.

4. Verfahren nach einem der Ansprüche 1 -3, **dadurch gekennzeichnet, dass** die Wärmeenergie durch Wärmekonvektion zugeführt wird, indem ein Heizgasstrom in Richtung des Arbeitsspalt (34) gerichtet wird.

5. Verfahren nach Anspruch nach einem der Ansprüche 1 - 4, **dadurch gekennzeichnet, dass** die Wärmeenergie zugeführt wird, indem die Temperatur der Schweißfolie (28) erhöht wird, bevor diese in den Arbeitsspalt (34) eingebracht wird.

6. Verfahren nach Anspruch nach einem der Ansprüche 1 - 5, **dadurch gekennzeichnet, dass** die Enden (12,13) des mindestens einen Dichtungsprofils (14) voneinander weg bewegt werden, in dem diese im Abstand zu dem Stoß (33) mittels eines Greifers (2a,2b) erfasst und auseinandergezogen werden.

7. Verfahren nach Anspruch nach einem der Ansprüche 1 - 5, **dadurch gekennzeichnet, dass** die Enden (12,13) des mindestens einen Dichtungsprofils (14) voneinander weg bewegt werden, in dem diese im Abstand zu dem Stoß (33) mittels eines Niederhalters zusammengedrückt werden.

8. Verfahren nach Anspruch nach einem der Ansprüche 1 - 4, **dadurch gekennzeichnet, dass** die Enden (12,13) des Dichtungsprofils (14) mittels eines dem Profil angepassten Formgreifers zueinander ausgerichtet werden.

9. Verfahren nach Anspruch nach einem der Ansprüche 1 - 8, **dadurch gekennzeichnet, dass** die Enden (12, 13) des Dichtungsprofils (14) gegeneinander gedrückt werden, nachdem der Arbeitsspalt (34) am Stoß aufgehoben wurde und/oder während dem Arbeitsspalt (34) Wärmeenergie mittels Wärmeleitung zugeführt wird.

10. Vorrichtung zur Durchführung des Verfahrens nach einem der Ansprüche 1- 9 umfassend Mittel zum Erzeugen des Arbeitsspaltes (2a,b,8a,b) an den Enden (12, 13) des Dichtungsprofils (14), eine Schweißfolienzuführung (3) und ein Heizsystem (4) zum Verschweißen der Schweißfolie (28) mit den Enden des Dichtungsprofils sowie eine mindestens in zwei Ebenen wirksame Positioniereinheit (5,7) zum Bewegen der Schweißfolienzuführung (3) und des Heizsystems (4) zwischen einer Ruhestellung und einer Arbeitsstellung.

11. Vorrichtung nach Anspruch 10, **dadurch gekennzeichnet, dass** die Vorrichtung (1) an einem Roboterarm angeordnet ist.

12. Vorrichtung nach Anspruch 10, **dadurch gekennzeichnet, dass** die Vorrichtung (1) stationär ausgeführt ist.

13. Vorrichtung nach einem der Ansprüche 10- 12, **dadurch gekennzeichnet, dass** die Mittel (2a,b,8a,b) zum Erzeugen des Arbeitsspaltes zwei Greifer (2a,b) mit jeweils zwei gegeneinander beweglichen Greifarmen (8a,b) und mindestens einen Antrieb zum Verändern des Abstandes zwischen den beiden Greifern aufweisen.

14. Vorrichtung nach einem der Ansprüche 10- 12, **dadurch gekennzeichnet, dass** die Mittel zum Erzeugen des Arbeitsspaltes zwei Niederhalter aufweisen, die mittels eines Antriebs zwischen einer Ausgangsposition und einer Arbeitsposition bewegbar sind.

15. Vorrichtung nach einem der Ansprüche 10- 14, **dadurch gekennzeichnet, dass** das Heizsystem (4) eine Heizplatte (17) aufweist.

16. Vorrichtung nach einem der Ansprüche 10- 14, **dadurch gekennzeichnet, dass** das Heizsystem (4) einen Infrarotstrahler aufweist.

17. Vorrichtung nach einem der Ansprüche 10- 16, **dadurch gekennzeichnet, dass** die Schweißfolienzuführung (3) zwei gegeneinander bewegliche Klemmbacken (19,21) zum Aufspannen der Schweißfolie (28) aufweist und beide Klemmbacken miteinander fluchtende Einschnitte (22,23) aufweisen, deren Größe mindestens dem Querschnitt des von den Klemmbacken umgebenen Dichtungsprofils (14) entspricht.

18. Vorrichtung nach Anspruch 17, **dadurch gekennzeichnet, dass** die Schweißfolienzuführung (3) eine Vorratsspule (26) und eine Aufwickelspule (27) für eine bahnförmige Schweißfolie (28) sowie zwischen den Spulen angeordnete Führungsmittel aufweist, mittels derer die von der Vorratsspule (26) abgezogene bahnförmige Schweißfolie (28) zwischen den Klemmbacken (19, 21) hindurchgeführt wird.

## Claims

1. A method for connecting the butt joint (33) of two correspondingly profiled ends (12, 13) of at least one sealing profile (14), which had previously been attached to the surface of a vehicle or vehicle part and whose ends (12, 13) abut flush with one another at the butt joint, wherein the ends of the at least one sealing profile are moved away from one another to produce a working gap (34), which runs out in the direction of the fastening surface of the sealing profile on the surface of the vehicle or vehicle part, and a welding film (28) is inserted into the working gap (34), which film is welded to the ends (12, 13) of the at least one sealing profile (14) by supplying thermal energy, after the working gap (34) at the butt joint has been eliminated.

2. The method according to claim 1, **characterised in that** the thermal energy is supplied by heat conduction by bringing the ends (12, 13) to be heated temporarily in contact with a warmer body (17) in the working gap (34).

3. The method according to claim 1 or 2, **characterised in that** the thermal energy is supplied by thermal radiation by directing electromagnetic waves onto the working gap (34).

4. The method according to any one of claims 1-3, **characterised in that** the thermal energy is supplied by heat convection by directing a heating gas stream in the direction of the working gap (34).

5. The method according to any one of claims 1-4, **characterised in that** the thermal energy is supplied by raising the temperature of the welding film (28) before this is inserted into the working gap (34).

6. The method according to any one of claims 1-5, **characterised in that** the ends (12, 13) of the at least one sealing profile (14) are moved apart from one another by grasping these at a distance from the butt joint (33) by means of a gripper (2a, 2b) and drawing these apart from one another.

7. The method according to any one of claims 1-5, **characterised in that** the ends (12, 13) of the at least one sealing profile (14) are moved apart from one another by compressing these at a distance from the butt joint (33) by means of a hold-down device.

8. The method according to any one of claims 1-4, **characterised in that** the ends (12, 13) of the at least one sealing profile (14) are aligned with respect to one another by means of a shape gripper.

9. The method according to any one of claims 1-8, **characterised in that** the ends (12, 13) of the at least one sealing profile (14) are pressed towards one another after the working gap (34) at the butt joint has been eliminated and/or whilst thermal energy is supplied to the working gap (34) by means of heat conduction.

10. A device for carrying out the method according to any one of claims 1-9, comprising means for producing the working gap (2a, b, 8a, b) at the ends (12, 13) of the sealing profile (14), a welding film supply (3) and a heating system (4) for welding the welding film (28) to the ends of the sealing profile as well as at least one positioning unit (5, 7) which is active in at least two planes, for moving the welding film supply (3) and the heating system (4) between a rest position and a working position.

11. The device according to claim 10, **characterised in that** the device (1) is disposed on a robot arm.

12. The device according to claim 10, **characterised in that** the device (1) is designed to be stationary.

13. The device according to any one of claims 10-12, **characterised in that** the means (2a, b, 8a, b) for producing the working gap comprise two grippers (2a, b) each having two gripper arms (8a, b) which are moveable with respect to one another and at least one drive for varying the distance between the two grippers.

14. The device according to any one of claims 10-12, **characterised in that** the means for producing the working gap comprise two hold-down devices which are movable between an initial position and a working position by means of a drive.

15. The device according to any one of claims 10-14, **characterised in that** the heating system (4) comprises a heating plate (17).

16. The device according to any one of claims 10-14, **characterised in that** the heating system (4) comprises an infrared emitter.

17. The device according to any one of claims 10-16, **characterised in that** the welding film supply (3) comprises two clamping jaws (19, 21) which are moveable with respect to one another for clamping the welding film (28) and both clamping jaws have indentations (22, 23) in alignment with one another, whose size at least corresponds to the cross-section of the sealing profile (14) surrounded by the clamping jaws.

18. The device according to claim 17, **characterised in that** the welding film supply (3) comprises a supply spool (26) and a winding spool (27) for a web-like welding film (28) as well as guide means disposed between the spools, by which means the web-like welding film (28) withdrawn from the supply spool (26) is guided between the clamping jaws (19, 21).

## Revendications

1. Procédé pour joindre, à leur point de jonction (33), deux extrémités (12, 13) profilées de manière correspondante d'au moins un profilé d'étanchéité (14) appliqué au préalable sur la surface d'un véhicule ou d'un élément de véhicule et dont les extrémités (12, 13) sont disposées bout à bout au point de jonction, les extrémités de l'au moins un profilé d'étanchéité étant éloignées l'une de l'autre pour créer une fente de travail (34) qui se referme en direction de la surface d'application du profilé d'étanchéité, sur la surface du véhicule ou de l'élément de véhicule, et un film de soudage (28) étant introduit dans la fente de travail (34) et étant soudé sur les extrémités (12, 13) de l'au moins un profilé d'étanchéité (14) par apport d'énergie calorifique, après suppression de la fente de travail (34) au point de jonction.

2. Procédé selon la revendication 1, **caractérisé en ce que** l'énergie calorifique est apportée par conduction thermique en amenant temporairement les extrémités (12, 13) à chauffer en contact avec un corps plus chaud (17) dans la fente de travail (34).

3. Procédé selon la revendication 1 ou 2, **caractérisé en ce que** l'énergie calorifique est apportée par rayonnement thermique en orientant des ondes électromagnétiques sur la fente de travail (34).

4. Procédé selon l'une des revendications 1 à 3, **caractérisé en ce que** l'énergie calorifique est apportée par convection thermique en orientant un flux de gaz chaud en direction de la fente de travail (34).

5. Procédé selon l'une des revendications 1 à 4, **caractérisé en ce que** l'énergie calorifique est apportée en augmentant la température du film de soudage (28) avant que celui-ci ne soit introduit dans la fente de travail (34).

6. Procédé selon l'une des revendications 1 à 5, **caractérisé en ce que** les extrémités (12, 13) de l'au moins un profilé d'étanchéité (14) sont éloignées l'une de l'autre en les saisissant à distance du point de jonction (33) au moyen d'une pince (2a, 2b) et en les écartant l'une de l'autre.

7. Procédé selon l'une des revendications 1 à 5, **caractérisé en ce que** les extrémités (12, 13) de l'au moins un profilé d'étanchéité (14) sont éloignées l'une de l'autre en les écrasant à distance du point de jonction (33) au moyen d'un presseur.

8. Procédé selon l'une des revendications 1 à 4, **caractérisé en ce que** les extrémités (12, 13) du profilé d'étanchéité (14) sont alignées l'une sur l'autre au moyen d'une pince de forme adaptée au profilé.

9. Procédé selon l'une des revendications 1 à 8, **caractérisé en ce que** les extrémités (12, 13) du profilé d'étanchéité (14) sont pressées l'une contre après la suppression de la fente de travail (34) au point de jonction et/ou pendant que de l'énergie calorifique est apportée à la fente de travail (34) par conduction thermique.

10. Dispositif pour la réalisation du procédé selon l'une des revendications 1 à 9 comprenant des moyens (2a, b, 8a, b) pour créer la fente de travail aux extrémités (12, 13) du profilé d'étanchéité (14), une alimentation en film de soudage (3) et un système de chauffage (4) pour le soudage du film de soudage (28) sur les extrémités du profilé d'étanchéité, ainsi qu'une unité de positionnement (5, 7) agissant au moins dans deux plans pour déplacer l'alimentation en film de soudage (3) et le système de chauffage (4) entre une position de repos et une position de travail.

11. Dispositif selon la revendication 10, **caractérisé en ce que** le dispositif (1) est disposé sur un bras de robot.

12. Dispositif selon la revendication 10, **caractérisé en ce que** le dispositif (1) est réalisé de manière stationnaire.

13. Dispositif selon l'une des revendications 10 à 12, **caractérisé en ce que** les moyens (2a, b, 8a, b) pour créer la fente de travail comprennent deux pinces (2a, b) munies chacune de deux branches (8a, b) mobiles l'une en direction de l'autre et au moins un entraînement pour modifier la distance entre les deux branches.

14. Dispositif selon l'une des revendications 10 à 12, **caractérisé en ce que** les moyens pour créer la fente de travail comprennent deux presseurs mobiles, au moyen d'un entraînement, entre une position initiale et une position de travail.

15. Dispositif selon l'une des revendications 10 à 14, **caractérisé en ce que** le système de chauffage (4) est pourvu d'une plaque chauffante (17).

16. Dispositif selon l'une des revendications 10 à 14, **caractérisé en ce que** le système de chauffage (4) est pourvu d'un radiateur à rayons infrarouges.

17. Dispositif selon l'une des revendications 10 à 16, **caractérisé en ce que** l'alimentation en film de soudage (3) comprend deux mâchoires de serrage (19, 21) mobiles en direction l'une de l'autre pour serrer le film de soudage (28), les deux mâchoires de serrage présentant des découpes (22, 23) alignées l'une sur l'autre, dont la dimension correspond au moins à la section du profil d'étanchéité (14) entouré par les mâchoires de serrage.

18. Dispositif selon la revendication 17, **caractérisé en ce que** l'alimentation en film de soudage (3) comprend une bobine d'alimentation (26) et une bobine réceptrice (27) pour un film de soudage (28) en forme de bande, ainsi que des moyens de guidage disposés entre les bobines, au moyen desquels le film de soudage (28) en forme de bande déroulé de la bobine d'alimentation (26) est guidé entre les mâchoires de serrage (19, 21).
